# EUROPÄISCHE PATENTSCHRIFT

(11) **EP 3 670 277 B1**
(45) Veröffentlichungstag und Bekanntmachung des Hinweises auf die Patenterteilung: **02.11.2022**
(21) Anmeldenummer: 19212521.9
(22) Anmeldetag: 29.11.2019
(51) Int. Cl.: B60T 13/66, B60T 13/74, B60T 17/22, B60T 8/32

(54) **BREMSSYSTEM FÜR EIN KRAFTFAHRZEUG UND KRAFTFAHRZEUG MIT EINEM SOLCHEN BREMSSYSTEM**
BRAKE SYSTEM FOR A MOTOR VEHICLE AND MOTOR VEHICLE WITH THE SAME
SYSTÈME DE FREINAGE POUR VÉHICULE AUTOMOBILE ET VÉHICULE AUTOMOBILE DOTÉ D'UN TEL SYSTÈME DE FREINAGE

(30) Priorität: 21.12.2018 DE 102018222757
(43) Veröffentlichungstag der Anmeldung: 24.06.2020
(73) Patentinhaber: Volkswagen AG, 38440 Wolfsburg (DE)
(72) Erfinder: Witte, Bastian, 38179 Groß Schwülper (DE)

(56) Entgegenhaltungen:
- EP-A2- 1 541 437
- WO-A1-2018/188901
- DE-A1-102013 017 688
- DE-A1-102014 006 613
- DE-A1-102015 206 572
- DE-B3-102008 009 043
- DE-B4-102013 017 688
- US-B1- 6 345 225

## Beschreibung

Die Erfindung betrifft ein Bremssystem für ein Kraftfahrzeug sowie ein Kraftfahrzeug mit einem derartigen Bremssystem.

Ein Kraftfahrzeug weist üblicherweise an jedem seiner Räder eine Betriebsbremse auf, die beispielsweise als hydraulische Bremse ausgebildet ist. Zusätzlich dazu ist das Kraftfahrzeug heutzutage mit zumindest zwei elektromechanischen Parkbremsen oder Feststellbremsen ausgestattet, die beispielsweise an jeweiligen Rädern einer vorderen oder typischerweise hinteren Achse des Kraftfahrzeugs angeordnet sind.

In der EP 2 977 282 A1 ist ein Bremssystem beschrieben, das zwei Bremskreise umfasst. Diese beiden Bremskreise umfassen jeweils zwei von insgesamt vier hydraulischen Bremsen des Kraftfahrzeugs, die jeweils an diagonal zueinander angeordneten Rädern des Kraftfahrzeugs angeordnet sind. Jedem dieser beiden Bremskreise ist zudem eine von zwei elektrischen Feststellbremsen zugeordnet, die bevorzugt an jeweils einem der beiden Räder der Hinterachse des Kraftfahrzeugs angeordnet ist. Hierbei wird jedem Bremskreis diejenige der beiden Feststellbremsen zugeordnet, die an dem Hinterrad angeordnet ist, an dem keine hydraulische Bremse dieses Bremskreises angeordnet ist. Somit können mit jedem der beiden Bremskreise jeweils die Bremsen an drei Rädern angesteuert werden. Fällt nun beispielsweise einer der beiden Bremskreise aus, zum Beispiel aufgrund eines Defekts, so kann jedes Hinterrad des Kraftfahrzeugs weiterhin durch den anderen Bremskreis abgebremst werden, und zwar entweder mit der entsprechenden hydraulischen Bremse oder der elektrischen Feststellbremse des anderen, nicht defekten Bremskreises, je nachdem, um welches Hinterrad es sich handelt. Das Bremssystem ist daher bei einem Einfachfehler betreffend einen der Bremskreise weiterhin funktionsfähig.

In der EP 2 719 593 A1 wird ein Bremssystem eines Fahrzeugs beschrieben, das zwei getrennte Bremskreise umfasst. Jeder dieser Bremskreise weist eine Druckerzeugungseinrichtung auf, die von einer eigenen Energiequelle mit elektrischer Energie versorgt wird. Wird nun in einem der beiden Bremskreise ein Defekt festgestellt, ist der fehlerhafte Bremskreis deaktivierbar und der funktionsfähige Bremskreis aktivierbar.

In der DE 600 03 310 T2 ist ein elektrohydraulisches Bremssystem beschrieben, das ein elektrisches Feststellbremsmittel umfasst, um zu ermöglichen, dass die Bremsvorrichtungen des elektrohydraulischen Bremssystems für Feststellbremszwecke betätigt werden kann.

Die WO 2018/188901 A1 zeigt ein hydraulisches Kraftfahrzeugbremssystem, das zwei redundante Bremskreise umfasst, die jeweils zwei hydraulische Radbremsen sowie eine elektrische Parkbremse umfassen.

Die DE 10 2008 009 043 B3 zeigt ein elektronisch geregeltes Bremssystem eines Zugfahrzeugs, das für einen Anhängerbetrieb vorgesehen ist, wobei das Bremssystem zwei redundante Bremskreise umfasst.

Die für ein Bremssystem eines Personenkraftwagens gültige Norm ECE-R13H unterscheidet zwischen Betriebsbremswirkung (6,44 Meter pro Quadratsekunde Mindestverzögerung, zu erfüllen bei intaktem Bremssystem) und Hilfsbremswirkung (2,4 Meter pro Quadratsekunde Mindestverzögerung, zu erfüllen bei einem beliebigen einfachen Defekt im Bremssystem). Für zwei voneinander unabhängige Fehler existieren keine Vorgaben. Allerdings sind Kombinationen möglich, bei denen das der Personenkraftwagen gar nicht mehr bremsen kann, da zum Beispiel ein Bremspedal verklemmt und/oder ein Handbremsseil gerissen ist. Für schwere Nutzfahrzeuge gilt die dazu vergleichbare Norm ECE-R13.

Der Erfindung liegt das Problem zugrunde, dass ein Kraftfahrzeug, das zum vollautonomen Fahren ausgelegt ist, zukünftig nicht mehr notwendigerweise ein Bremspedal aufweist, das beispielsweise durch einen Benutzer des Kraftfahrzeugs betätigbar wäre. Dies hat zur Folge, dass ein Bremssystem eines derartigen Kraftfahrzeugs dazu ausgelegt sein sollte, bei einem und auch zwei voneinander unabhängigen Defekten im Bremssystem mittels zumindest einer zusätzlichen Rückfallvorrichtung weiterhin bremsfähig zu bleiben. Das Bremssystem sollte daher über ausreichende Redundanzen verfügen, um das Kraftfahrzeug stets abbremsen zu können, und zwar idealerweise:
- bei fehlerfreiem Bremssystem mit Betriebsbremswirkung,
- bei einem beliebigen Fehler ebenfalls mit Betriebsbremswirkung, und
- bei einer beliebigen Kombination aus zwei voneinander unabhängigen Fehlern mit Hilfsbremswirkung.

Es ist die Aufgabe der Erfindung, eine Lösung bereitzustellen, mittels der sogar bei einem Doppelfehler in einem Bremssystem eines Kraftfahrzeugs das Bremssystem weiterhin funktionsfähig ist, um zumindest eine Hilfsbremsung durchzuführen.

Diese Anforderungen gehen somit weit über die heutigen Anforderungen aus der ECE-R13H hinaus.

Die Aufgabe wird durch die Gegenstände der unabhängigen Patentansprüche gelöst. Vorteilhafte Ausgestaltungen mit zweckmäßigen und nicht trivialen Weiterbildungen der Erfindung sind in den abhängigen Ansprüchen, der folgenden Beschreibung und der Figur angegeben.

Eine Lösung ist nach Erkenntnis der Erfindung möglich, indem eine Ansteuerung von Feststellbremsen des Kraftfahrzeugs unabhängig von einer Funktionsfähigkeit der Steuereinheiten der Bremskreise des Bremssystems erfolgt.

Das erfindungsgemäße Bremssystem für ein Kraftfahrzeug geht hierbei von der bekannten Anordnung aus, dass vier jeweils einem Rad des Kraftfahrzeugs zugeordnete Betriebsbremsen, mindestens zwei jeweiligen Rädern des Kraftfahrzeugs zugeordnete elektrische Feststellbremsen, zwei Steuereinheiten sowie zwei Batterien vorhanden sind. Zudem kann das Kraftfahrzeug einen zentralen elektrischen Generator zur Versorgung des Kraftfahrzeugs mit elektrischer Energie umfassen, der umgangssprachlich als Lichtmaschine bezeichnet wird. Als Bremse im Sinne der Erfindung ist eine Vorrichtung zu verstehen, mittels derer eine Bewegungsenergie eines der Räder des Kraftfahrzeugs in eine Wärmeenergie umgewandelt wird, wodurch die Bewegungsenergie abgebaut wird. Dadurch wird eine Rotation des Rades gebremst. Die vier den jeweiligen Rädern zugeordneten Betriebsbremsen sind im Falle eines Personenkraftwagens bevorzugt als hydraulisch oder zukünftig beispielsweise als elektromechanisch betätigte Bremsen und im Falle eines schweren Nutzfahrzeugs als pneumatisch betätigte Bremsen ausgebildet. Jede Betriebsbremse kann jeweils beispielsweise als Trommelbremse oder Scheibenbremse ausgebildet sein. Die zumindest zwei elektrischen Feststellbremsen können jeweils als elektromechanische Parkbremse, das heißt als elektrisch betätigte Bremsen, ausgebildet sein. Bei einem schweren Nutzfahrzeug werden als Feststellbremsen beispielsweise Federspeicherbremsen elektro-pneumatisch betätigt. Die weitere Darstellung erfolgt am Beispiel eines Personenkraftwagens als Kraftfahrzeug mit hydraulischen Betriebsbremsen und elektromechanischen Feststellbremsen. Die Ausführungen gelten aber entsprechend auch für die anderen Bremstypen.

Das erfindungsgemäße Bremssystem ist in der bekannten Weise in zwei unabhängige Bremskreise eingeteilt. Die beiden besagten Steuereinheiten sind nun dazu ausgelegt, jeweils einen der Bremskreise zu steuern. Dieser jeweilige Bremskreis umfasst zwei der Betriebsbremsen, also zum Beispiel zwei hydraulische Bremsen, und zumindest eine der elektrischen Feststellbremsen, wobei jede der Bremsen des Bremssystems einem der Bremskreise zugeordnet ist und somit von jeweils genau einer der zwei Steuereinheiten angesteuert wird. Die zwei besagten Batterien sind dazu ausgelegt, jeweils einen der Bremskreise des Bremssystems mit elektrischer Energie zu versorgen. Die jeweiligen Batterien können hierbei beispielsweise vom zentralen elektrischen Generator des Kraftfahrzeugs mit elektrischer Energie versorgt werden. Bei Elektrofahrzeugen und Hybridfahrzeugen kann der zentrale elektrische Generator als Gleichstromwandler zum Wandeln der Hochvoltspannung des elektrischen Fahrantriebs in Niedervoltspannung ausgebildet sein. Eine Fahrzeugnetzspannung liegt typischerweise bei 12 Volt Gleichspannung bei einem Personenkraftwagen und bei 24 Volt Gleichspannung bei einem Lastkraftwagen. In Summe stehen somit drei elektrische Energiequellen für das Bremssystem zur Verfügung.

Ausgehend von diesem Bremssystem mit zwei getrennten, voneinander unabhängigen Bremskreisen ist es möglich, mit dem Kraftfahrzeug bei Ausfall eines der Bremskreise, beispielsweise bei Versagen einer der Steuereinheiten oder einer der Batterien, ein Bremsmanöver mittels des verbleibenden Bremskreises in der eingangs beschriebenen Weise durchzuführen. Die Erfindung erweitert diese Redundanz nun dahingehend, dass eine Absicherung gegen Doppelfehler bereitgestellt wird, die beide Bremskreise betreffen.

Das Bremssystem ist dazu ausgelegt, ein Defektsignal zu bilden, falls ein die beiden Bremskreise betreffender Doppelfehler erkannt wird, der einen Defekt in zumindest einer der Steuereinheiten umfasst und/oder bei dem eine jeweilige Versorgungsspannung zumindest einer der Steuereinheiten unter einen vorgegebenen Grenzwert sinkt. Das Bremssystem umfasst außerdem zumindest ein elektronisches Schaltungselement, das dazu ausgelegt ist, bei gebildetem oder vorliegendem Defektsignal die elektrischen Feststellbremsen des Bremssystems anzusteuern. Das zumindest eine elektronische Schaltungselement ist bevorzugt von den beiden Steuereinheiten der Bremskreise getrennt und beispielsweise als weitere Steuereinheit des Bremssystems ausgebildet. Das Bremssystem ist also dazu ausgelegt, bei einem Doppelfehler im Bremssystem, bei dem beide Bremskreise nicht mehr über die jeweilige Steuereinheit ansteuerbar sind, das Defektsignal zu erzeugen, auf welches das zumindest eine elektronische Schaltungselement reagiert. Das Defektsignal kann beispielsweise von den beiden jeweiligen Steuereinheiten der zwei Bremskreise des Bremssystems gebildet werden. Zusätzlich oder alternativ dazu kann das zumindest eine elektronische Schaltungselement dazu ausgelegt sein, selbst einen Defekt in den Bremskreisen zu detektieren, woraufhin das Defektsignal vom zumindest einen elektronischen Schaltungselement selbst gebildet wird. Falls also ein Doppelfehler erkannt wird, wird diese Information letztendlich durch das Defektsignal dem zumindest einen elektronischen Schaltungselement signalisiert. Zur Überwachung der jeweiligen Funktionsfähigkeit der jeweiligen Steuereinheit des jeweiligen Bremskreises kann zum Beispiel eine sogenannte Watchdog-Funktion, wie beispielsweise ein intelligenter Watchdog oder ein Time-Out-Watchdog, und/oder eine sogenannte Heart-Beat-Überwachung im Bremssystem vorgesehen sein, die den jeweiligen Ausfall der Steuereinheit erfassen und daraufhin das Defektsignal bilden kann. Eine Unterbrechung in einer elektrischen Versorgung der Bremskreise kann mittels einer Spannungsüberwachung erkannt werden.

Das Defektsignal wird beispielsweise bereitgestellt, wenn beide Steuereinheiten der jeweiligen Bremskreise feststellen, dass ihre Energieversorgung nicht mehr für ihren Betrieb ausreicht, da es beispielsweise zu einer Unterbrechung in einer Versorgungsleitung gekommen ist. Zusätzlich oder alternativ dazu kann es zu zumindest einem Softwarefehler oder Hardwarefehler innerhalb der jeweiligen Steuereinheit kommen, der ebenfalls detektiert werden kann. Möglich sind hierbei beliebige Kombinationen von jeweils mindestens zwei Defekten, wobei jeder der Bremskreise von zumindest einem der Defekte betroffen ist.

Das zumindest eine Schaltungselement kann also die zumindest zwei Feststellbremsen des Bremssystems unabhängig von den Steuereinheiten der beiden Bremskreise ansteuern. Das zumindest eine elektronische Schaltungselement ist entsprechend dazu ausgelegt, die elektrischen Feststellbremsen anzusteuern, sobald das Defektsignal gebildet oder empfangen wurde, das heißt wenn tatsächlich zeitgleich in beiden Bremskreisen ein Fehler aufgetreten ist oder detektiert wurde. Mittels des zumindest einen elektronischen Schaltungselements kann somit erreicht werden, dass das Bremssystems weiterhin das Kraftfahrzeug abbremst, da zumindest die elektrischen Feststellbremsen weiterhin ansteuerbar sind, mittels derer das Kraftfahrzeug gegebenenfalls abgebremst werden kann.

Das erfindungsgemäße Bremssystem stellt somit ein Bremssystem mit erweiterter Verfügbarkeit dar, da es doppelfehlertolerant ist und trotz Doppelfehler weiterhin ein gezieltes Abbremsen des Kraftfahrzeugs ermöglicht. Dies ist insbesondere bei Kraftfahrzeugen ohne Bremspedal zur Unterstützung des Bremsvermögens sinnvoll, weil durch einen Wegfall des Bremspedals eine bisher im Kraftfahrzeug durch fahrerseitiges Bremsen bestehende Notfallbremsfunktion nicht mehr vorhanden ist, die nun allerdings bei vorhandenen elektrischen Parkbremsen mittels des zumindest einen elektronischen Schaltungselements ersetzt werden kann.

Erfindungsgemäß ist es vorgesehen, dass das zumindest eine elektronische Schaltungselement als anwendungsorientiert integrierte Schaltung ausgebildet ist. Das zumindest eine elektronische Schaltungselement ist also als ASIC (Application-specific integrated circuit) ausgebildet, das heißt als elektronische Schaltung, die als integrierter Schaltkreis realisiert wurde. In dieses ASIC sind entsprechende Logikfunktionen integriert, sodass es dazu ausgelegt ist, die elektrischen Feststellbremsen anzusteuern. Zudem ist es dazu ausgelegt, das bereitgestellte Defektsignal, beispielsweise von den jeweiligen Steuereinheiten der beiden Bremskreise, auszuwerten und sich daraufhin zu aktivieren, das heißt die Ansteuerung der Feststellbremsen zu übernehmen. Das zumindest eine elektronische Schaltungselement ist des Weiteren dazu ausgelegt, unabhängig von der jeweiligen Steuereinheit und den jeweiligen Betriebsbremsen, mit elektrischer Energie der jeweiligen Batterie versorgt zu werden. Eine Energieversorgung des zumindest einen elektronischen Schaltungselements ist somit unabhängig von einer Energieversorgung der zwei Steuereinheiten sowie der insgesamt vier Betriebsbremsen. Das zumindest eine elektronische Schaltungselement ist letztendlich dazu ausgelegt, unabhängig von einer Energieversorgung der jeweiligen Steuereinheit sowie der jeweiligen Betriebsbremsen die elektrische Feststellbremse mit Energie aus der Batterie zu versorgen. Hierbei kann in jedem der beiden Bremskreise ein eigenes elektronisches Schaltungselement oder ein gemeinsames Schaltungselement für beide Bremskreise vorgesehen sein. Aufgrund der Ausgestaltung als ASIC ergibt sich eine schaltungstechnische Anpassung auf das spezifische Problem der Ansteuerung der Feststellbremsen in Reaktion auf einen Doppelfehler und damit eine effizientere und schnellere Ausführung als eine funktionsgleiche Umsetzung in einer zusätzlichen Steuereinheit. Hierdurch ist also auf einfache Art und Weise das zumindest eine elektronische Schaltungselement des Bremssystems realisierbar.

Die Erfindung umfasst auch Ausgestaltungsformen, durch die sich zusätzliche Vorteile ergeben.

In einer besonders vorteilhaften Ausgestaltungsform der Erfindung ist es vorgesehen, dass in jedem der Bremskreise die Batterie mit den Betriebsbremsen und der Steuereinheit mittels eines Hauptsteckverbinders verbunden ist. Dagegen ist in jedem der Bremskreise die Batterie mit der Feststellbremse mittels eines vom Hauptsteckverbinder mechanisch entkoppelten Feststellbremssteckverbinders verbunden. Hierbei umfasst das Bremssystem bevorzugt insgesamt nur einen Feststellbremssteckverbinder, über den beide Batterien mit der jeweiligen elektrischen Feststellbremse gekoppelt sind.

Das Bremssystem umfasst in diesem Fall drei Steckverbinder, von denen zwei jeweils eine der Batterien mit den jeweiligen Betriebsbremsen und der jeweiligen Steuereinheit eines der Bremskreise koppeln. Zudem umfasst das Bremssystem einen von den Hauptsteckverbindern mechanisch entkoppelten Feststellbremssteckverbinder, der dazu ausgelegt ist, die jeweiligen Batterien der Bremskreise mit der entsprechenden Feststellbremse zumindest mittelbar zu koppeln. Falls nun in einem der Bremskreise der jeweilige Hauptsteckverbinder defekt ist oder nicht mehr soweit eingesteckt ist, dass er elektrisch verbindet, kann die jeweilige Versorgungsspannung der Steuereinheit unter den vorgegebenen Grenzwert sinken, sodass, falls auch in dem anderen Bremskreis beispielsweise ein Defekt in der Steuereinheit auftritt und/oder der entsprechende Hauptsteckverbinder defekt oder nicht gesteckt ist, das Defektsignal dem zumindest einen elektronischen Schaltungselement bereitgestellt wird und die Feststellbremsen angesteuert werden können. Der mechanisch entkoppelte Feststellbremssteckverbinder ermöglicht dann immer noch eine elektrische Versorgung der Feststellbremsen. Hierdurch ist letztendlich ermöglicht, dass die elektrischen Feststellbremsen in Abhängigkeit von dem Defektsignal von dem zumindest einen elektronischen Schaltungselement ansteuerbar sind. Außerdem kann eine Anzahl von Steckverbindern im Bremssystem dennoch klein gehalten werden, wodurch das Bremssystem kostengünstig realisierbar wird.

In einer vorteilhaften Ausgestaltungsform der Erfindung ist es vorgesehen, dass der jeweilige Bremskreis zum Ansteuern der jeweiligen Betriebsbremsen eine Ventileinrichtung und eine Pumpe umfasst. Diese sind in jedem der Bremskreise dazu ausgelegt, einen Fluss eines den Bremskreis durchströmenden Bremsmediums zu steuern. Derartige Ventileinrichtungen und Pumpen werden zum Beispiel in der eingangs genannten EP 2 977 282 A1 im Zusammenhang mit einem Bremssystem, umfassend zwei Bremskreise, detailliert beschrieben. Die Ventileinrichtung und die Pumpe jedes der Bremskreise werden im fehlerfreien Fall jeweils von der Steuereinheit des jeweiligen Bremskreises angesteuert. Die Energieversorgung erfolgt über den Hauptsteckverbinder des Bremskreises mit der Batterie des Bremskreises. Die Ventileinrichtung und die Pumpe sind also jeweils über den Hauptsteckverbinder mit der Batterie gekoppelt.

In einer Ausgestaltungsform der Erfindung ist es vorgesehen, dass in jedem der Bremskreise eine elektrische Versorgung der Pumpe und/oder der Ventileinrichtung mit einer elektrischen Versorgung der Steuereinheit über eine Richteinrichtung gekoppelt ist. Die Richteinrichtung ist dazu ausgelegt, einen unidirektionalen Stromdurchfluss zur Steuereinheit zuzulassen. Die Richteinrichtung kann zum Beispiel als Diode ausgebildet sein, die in ihrer Durchlassrichtung zur Steuereinheit gerichtet ist. Alternativ dazu kann die Richteinrichtung ein Transistor sein, der dazu ausgelegt ist, als ideale Diode geschaltet zu werden, das heißt, der Schaltzustand des Transistors (elektrisch leitend oder sperrend) wird durch eine Schaltlogik in Abhängigkeit von einer Ausrichtung der über dem Transistor abfallenden elektrischen Spannung geschaltet, um das Schaltverhalten einer idealen Diode nachzubilden. In jedem der Bremskreise ist also zum Beispiel eine elektrische Versorgungsleitung zwischen dem Hauptsteckverbinder und der Pumpe und/oder der Ventileinrichtung mittels einer Verbindungsleitung mit einer elektrischen Versorgungsleitung zwischen dem Hauptsteckverbinder und der Steuereinheit gekoppelt. Mit den besagten Leitungen ist jeweils beispielsweise ein Draht oder eine Leiterbahn gemeint.

Ist die elektrische Versorgungsleitung, die direkt zur Steuereinheit führt, unterbrochen, ist es weiterhin möglich, dass über die Verbindungsleitung die Steuereinheit dennoch mit elektrischer Energie von der Batterie versorgt wird, und zwar über die Versorgungsleitung der Pumpe oder der Ventileinrichtung. Die Steuereinheit von jedem der Bremskreise ist somit dazu ausgelegt, durch eine redundante Verschaltung aus mehreren Spannungsversorgungen betrieben werden zu können, was ermöglicht, dass zum Beispiel bei einer ausgelösten Sicherung in der elektrischen Versorgung einer der Steuereinheiten eine weitere Energieversorgung dieser Steuereinheit sichergestellt ist.

In einer weiteren vorteilhaften Ausgestaltungsform der Erfindung ist es vorgesehen, dass in jedem der Bremskreise eine elektrische Versorgung der elektrischen Feststellbremse mit der elektrischen Versorgung der Steuereinheit über eine Richteinrichtung gekoppelt ist. Die Richteinrichtung kann in der bereits beschriebenen Weise ausgestaltet sein. Die Richteinrichtung kann also zum Beispiel als Diode ausgebildet sein, die in ihrer Durchlassrichtung zur Steuereinheit gerichtet ist. Zum Beispiel kann in jedem der Bremskreise eine elektrische Versorgungsleitung zwischen dem Feststellbremssteckverbinder und der elektrischen Feststellbremse mittels einer Verbindungsleitung mit der elektrischen Versorgungsleitung zwischen dem Hauptsteckverbinder und der Steuereinheit gekoppelt sein. Diese Verbindungsleitung umfasst zum Beispiel die Diode. Die Steuereinheit kann somit mithilfe der elektrischen Versorgung der Feststellbremse redundant versorgt werden.

In einer Ausgestaltungsform der Erfindung ist es vorgesehen, dass das Bremssystem nur ein gemeinsames elektronisches Schaltungselement umfasst, wie dies bereits erwähnt wurde. In jedem der Bremskreise ist dann die elektrische Versorgung von dessen elektrischer Feststellbremse mit einer elektrischen Versorgung des gemeinsamen elektronischen Schaltungselements über eine Richteinrichtung gekoppelt. Auch diese Richteinrichtung kann in der bereits beschriebenen Weise ausgestaltet sein. Die Richteinrichtung kann also zum Beispiel als Diode ausgebildet sein, die in ihrer Durchlassrichtung zum gemeinsamen elektronischen Schaltungselement gerichtet ist. Es kann also zum Beispiel in jedem der Bremskreise eine elektrische Versorgungsleitung zwischen dem Feststellbremssteckverbinder und der elektrischen Feststellbremse mittels einer Verbindungsleitung mit dem gemeinsamen elektronischen Schaltungselement gekoppelt sein. Die Verbindungsleitung umfasst zum Beispiel die Diode. Das gemeinsame elektronische Schaltungselement kann somit von beiden Batterien über einen gemeinsamen Feststellbremssteckverbinder mit elektrischer Energie aus den Batterien versorgt werden. Hierdurch wird ein kostengünstig zu realisierendes Bremssystem ermöglicht, da nur ein elektronisches Schaltungselement im Bremssystem verbaut wird, aber dennoch die gleiche Funktionsfähigkeit bei Doppelfehlern im Bremssystem gegeben wird, wie wenn zwei getrennte Schaltungselemente verbaut worden wären.

Die Erfindung betrifft zudem ein Kraftfahrzeug mit einem Bremssystem, wie es oben beschrieben wurde. Die im Zusammenhang mit dem erfindungsgemäßen Bremssystem vorgestellten bevorzugten Ausgestaltungen und deren Vorteile gelten entsprechend, soweit anwendbar, für das erfindungsgemäße Kraftfahrzeug.

Im Folgenden sind Ausführungsbeispiele der Erfindung beschrieben. Hierzu zeigt:
- Fig. 1: eine schematische Darstellung eines Kraftfahrzeugs mit einem Bremssystem;
- Fig. 2: ein schematischer Schaltplan eines Bremssystems für ein Kraftfahrzeug umfassend zwei elektronische Schaltungselemente; und
- Fig. 3: ein schematischer Schaltplan eines Bremssystems für ein Kraftfahrzeug umfassend ein gemeinsames elektronisches Schaltungselement.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

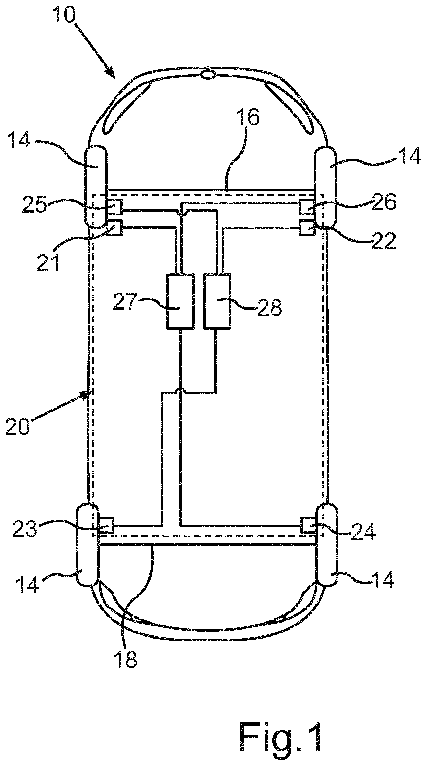

In Fig. 1 ist ein Kraftfahrzeug 10 skizziert, das vier Räder 14 aufweist, zwei an einer Vorderachse 16 und zwei an einer Hinterachse 18. Das Kraftfahrzeug 10 kann dazu ausgelegt sein, eine autonome Fahrt durchzuführen, das heißt eine Fahrt ohne manuelle Führung eines Fahrers des Kraftfahrzeugs 10. Das Kraftfahrzeug 10 weist ein Bremssystem 20 auf, wobei das Bremssystem 20 vier jeweils einem der Räder 14 des Kraftfahrzeugs 10 zugeordnete Betriebsbremsen 21, 22, 23, 24, die in diesem Ausführungsbeispiel als hydraulische Bremsen 21, 22, 23 und 24 ausgebildet sind, sowie zwei jeweiligen Rädern 14 der Vorderachse 16 zugeordnete elektrische Feststellbremsen 25 und 26 aufweist. Hierbei ist am Rad 14 vorne links die hydraulische Bremse 21, am Rad 14 vorne rechts die hydraulische Bremse 22, am Rad 14 hinten links die hydraulische Bremse 23 und am Rad 14 hinten rechts die hydraulische Bremse 24 angeordnet. Die elektrische Feststellbremse 25 ist dem Rad 14 vorne links zugeordnet, wohingegen die elektrische Feststellbremse 26 dem Rad 14 vorne rechts zugeordnet ist. Die beiden elektrischen Feststellbremsen 25 und 26 sind somit jeweiligen Rädern 14 der Vorderachse 16 des Kraftfahrzeugs 10 zugeordnet.

Zudem umfasst das Bremssystem 20 zwei Steuereinheiten 27 und 28. Die jeweiligen Steuereinheiten 27, 28 sind jeweils dazu ausgelegt, jeweils einen der Bremskreise des Bremssystems 20 anzusteuern. Der jeweilige Bremskreis umfasst zwei der hydraulischen Bremsen 21, 22, 23, 24 und eine der elektrischen Feststellbremsen 25, 26. Hierbei ist jede der Bremsen 21 bis 26 des Bremssystems 20 von jeweils genau einer der zwei Steuereinheiten 27, 28 ansteuerbar. Der erste Bremskreis umfasst hierbei die Steuereinheit 27, die hydraulischen Bremsen 21 und 24 sowie die elektrische Feststellbremse 26. Demgegenüber umfasst der zweite Bremskreis die Steuereinheit 28, die hydraulischen Bremsen 22 und 23 sowie die elektrische Feststellbremse 25.

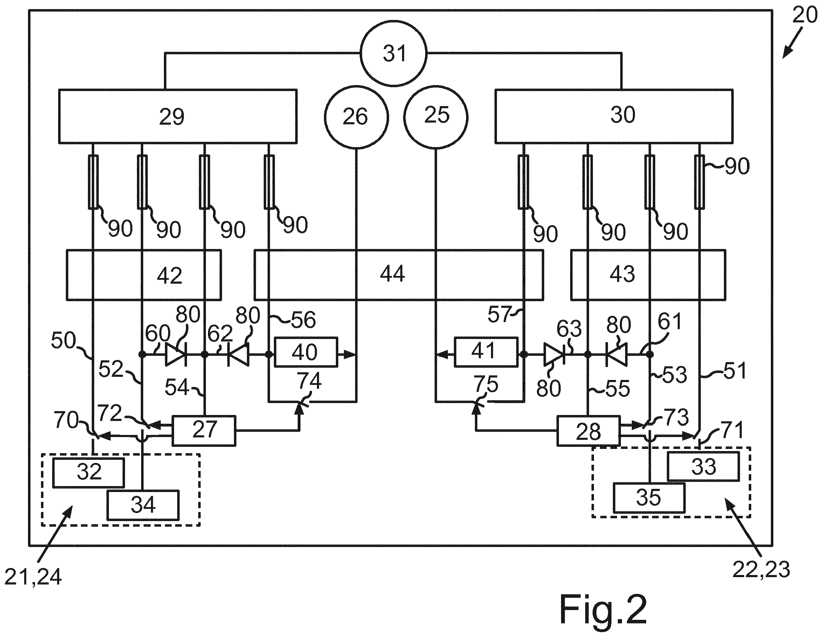

In Fig. 2 ist ein schematisierter Schaltplan des Bremssystems 20 skizziert. Aus diesem wird deutlich, dass jeder der Bremskreis des Bremssystems 20 zum Ansteuern der jeweiligen Betriebsbremsen 21, 22, 23, 24, eine Ventileinrichtung 32, 33 und eine Pumpe 34, 35 umfasst, die in jedem der Bremskreise dazu ausgelegt sind, einen Fluss eines den Bremskreis durchströmenden Bremsmediums zu steuern. In jeder der Ventileinrichtungen 32, 33 sind jedem Rad 14 dabei zur individuellen Druckregelung typischerweise ein Einlass- und ein Auslassventil zugeordnet. Zudem umfasst jeder Bremskreis eine Batterie 29, 30 zum Versorgen des jeweiligen Bremskreises des Bremssystems 20 mit elektrischer Energie. Die beiden Batterien 29, 30 des Bremssystems 20 werden außerdem von einem Generator 31 des Kraftfahrzeugs 10 mit elektrischer Energie versorgt. Jeder der Bremskreise umfasst des Weiteren ein elektrisches Schaltungselement 40, 41, das beispielsweise als anwendungsorientierte integrierte Schaltung (ASIC) ausgebildet und dazu ausgelegt ist, unabhängig von der Steuereinheit 27, 28 und den Betriebsbremsen 21, 22, 23, 24 mit elektrischer Energie der Batterie 29, 30 versorgt zu werden.

In jedem der Bremskreise ist die Batterie 29, 30 mit den Betriebsbremsen 21, 22, 23, 24, das heißt der Ventileinrichtung 32, 33 sowie der Pumpe 34, 35, und der Steuereinheit 27, 28 mittels eines Hauptsteckverbinders 42, 43 zumindest mittelbar gekoppelt. Hierbei ist in jedem Bremskreis die Ventileinrichtung 32, 33 und die Pumpe 34, 35 jeweils von der Steuereinheit 27, 28 ansteuerbar. Dieses Ansteuern wird hier mit einem jeweiligen Leistungshalbleiter oder Leistungshalbleiterschalter 70, 71, 72, 73 dargestellt. Ein Leitungshalbleiterschalter kann zum Beispiel auf der Basis von zumindest einem MOSFET oder IGBT realisiert sein. Die jeweilige Steuereinheit 27, 28 ist dazu ausgelegt, den jeweiligen Leistungshalbleiterschalter 70, 71, 72, 73 anzusteuern und dadurch die Energieversorgung der Ventileinrichtung 32, 33 und der Pumpe 34, 35 zu steuern. Die Steuereinheit 27, 28, die dazu ausgelegt ist, sowohl als Regelungseinheit als auch als Überwachungseinheit den jeweiligen Bremskreis anzusteuern, kann also zum Beispiel ein zeitlich moduliertes Bremsmoment mittels der jeweiligen Bremsen 21, 22, 23, 24 des Bremssystems 20 an die Räder 14 des Kraftfahrzeugs 10 übermitteln, und zwar basierend auf entsprechender Ansteuerung der Leistungshalbleiterschalter 70, 71, 72, 73. Hierdurch wird ermöglicht, dass in einem Normalbetrieb, das heißt zu einem Zeitpunkt, zu dem kein Defektsignal vorliegt, mittels der beiden Steuereinheiten 27, 28 und der beiden Bremskreise das Kraftfahrzeug 10, abhängig beispielsweise von Bremssignalen einer zentralen Steuereinrichtung des Kraftfahrzeugs 10, abgebremst werden kann.

In jedem der Bremskreise ist eine elektrische Leitung 52, 53 zwischen dem Hauptsteckverbinder 42, 43 und dem Leistungshalbleiterschalter 72, 73 vor der Pumpe 34, 35 mittels einer Verbindungsleitung 60, 61 mit der elektrischen Leitung 54, 55 zwischen dem Hauptsteckverbinder 42, 43 und der Steuereinheit 27, 28 gekoppelt. Alternativ oder zusätzlich dazu kann eine elektrische Leitung 50, 51 beispielsweise in jedem Bremskreis zwischen dem Hauptsteckverbinder 42, 43 und dem Leistungshalbleiterschalter 70, 71 vor der Ventileinrichtung 32, 33 mittels der Verbindungsleitung 60, 61 mit der elektrischen Leitung 54, 55 zwischen dem Hauptsteckverbinder 42, 43 und der Steuereinheit 27, 28 gekoppelt sein. Die jeweilige Verbindungsleitung 60, 61 umfasst jeweils eine Diode 80, deren Durchlassrichtung zur Steuereinheit 27, 28 gerichtet ist. In jedem der Bremskreise ist also eine elektrische Versorgung der Pumpe 34, 35 und/oder der Ventileinrichtung 32, 33 mit einer elektrischen Versorgung der Steuereinheit 27, 28 über die Diode 80 gekoppelt. Alternativ zur Diode 80 kann eine andere Richteinrichtung vorgesehen sein, die dazu ausgelegt ist, nur einen unidirektionalen Stromdurchfluss zur Steuereinheit 27, 28 zuzulassen.

Zudem umfasst das Bremssystem 20 einen gemeinsamen Feststellbremssteckverbinder 44 für beide Bremskreise. In jedem der Bremskreise ist die Batterie 29, 30 mit der Feststellbremse 25, 26 mittels des vom Hauptsteckverbinder 42, 43 mechanisch entkoppelten einzigen Feststellbremssteckverbinder 44 zumindest mittelbar gekoppelt. In jedem der Bremskreise ist die elektrische Leitung 56, 57 zwischen dem Feststellbremssteckverbinder 44 und der elektrischen Feststellbremse 25, 26 mittels einer Verbindungsleitung 62, 63 mit der elektrischen Leitung 54, 55 zwischen dem Hauptsteckverbinder 42, 43 und der Steuereinheit 27, 28 gekoppelt. Auch diese Verbindungsleitung 62, 63 umfasst eine Diode 80, deren Durchlassrichtung zur Steuereinheit 27, 28 gerichtet ist. In jedem der Bremskreise ist also eine elektrische Versorgung der Feststellbremse 25, 26 mit der elektrischen Versorgung der Steuereinheit 27, 28 über die Diode 80 gekoppelt. Alternativ zur Diode 80 kann eine andere Richteinrichtung vorgesehen sein, die dazu ausgelegt ist, nur einen unidirektionalen Stromdurchfluss zur Steuereinheit 27, 28 zuzulassen.

Zudem umfasst die elektrische Leitung 56, 57 zwischen dem Feststellbremssteckverbinder 44 und der elektrischen Feststellbremse 25, 26 in jedem der Bremskreise einen Leistungshalbleiterschalter 74, 75, wobei die Steuereinheit 27, 28 dazu ausgelegt ist, diesen Leistungshalbleiterschalter 74, 75 anzusteuern und dadurch die elektrische Leitung 56, 57 abwechselnd zu öffnen und zu schließen. Mittels dieses Leistungshalbleiterschalters 74, 75 kann beispielhaft die Ansteuerung der Feststellbremsen 25, 26 mittels der Steuereinheit 27, 28 in jedem Bremskreis dargestellt werden.

Zudem sind zwischen der jeweiligen Batterie 29, 30 und den jeweiligen Hauptsteckverbindern 42, 43 beziehungsweise dem Feststellbremssteckverbinder 44 jeweilige Klemmen 90 und Sicherungen in den jeweiligen elektrischen Leitungen 50, 51, 52, 53, 54, 55, 56, 57 angeordnet.

Das Bremssystem 20 ist dazu ausgelegt, ein Defektsignal zu bilden. Dieses Defektsignal wird immer dann gebildet, wenn in den beiden Bremskreisen ein Defekt in der Steuereinheit 27, 28 auftritt und/oder eine jeweilige Versorgungsspannung der Steuereinheit 27, 28 unter einen vorgegebenen Grenzwert sinkt. Letzteres tritt beispielsweise dann auf, wenn der Hauptsteckverbinder 42, 43 defekt oder nicht gesteckt ist. Bei dem Defekt in der Steuereinheit 27, 28 handelt es sich beispielsweise um einen Softwarefehler oder einen Hardwarefehler in der entsprechenden Steuereinheit 27, 28. Damit das Defektsignal gebildet wird, muss also in beiden Bremskreisen eine elektrische Störung vorliegen, das heißt es muss ein sogenannter Doppelfehler im Bremssystem 20 auftreten. Beispielsweise kann im ersten Bremskreis ein Defekt in der ersten Steuereinheit 27 auftreten, da in dieser ein Softwarefehler aufgetreten ist, und gleichzeitig im zweiten Bremskreis ein Absinken der Versorgungsspannung der zweiten Steuereinheit 28 beobachtet werden, da es zu einem Defekt in der elektrischen Verbindung 55 zwischen der Batterie 30 und der zweiten Steuereinheit 28 gekommen ist. In einer derartigen Situation wird das Defektsignal gebildet. Haben die elektronischen Schaltungselemente 40, 41 das Defektsignal empfangen, das heißt, liegt das gebildete Defektsignal vor, steuern diese daraufhin die elektrischen Feststellbremsen 25, 26 an, sodass das Bremssystem 20 weiterhin funktionsfähig ist und das Kraftfahrzeug 10 gegebenenfalls abgebremst werden kann.

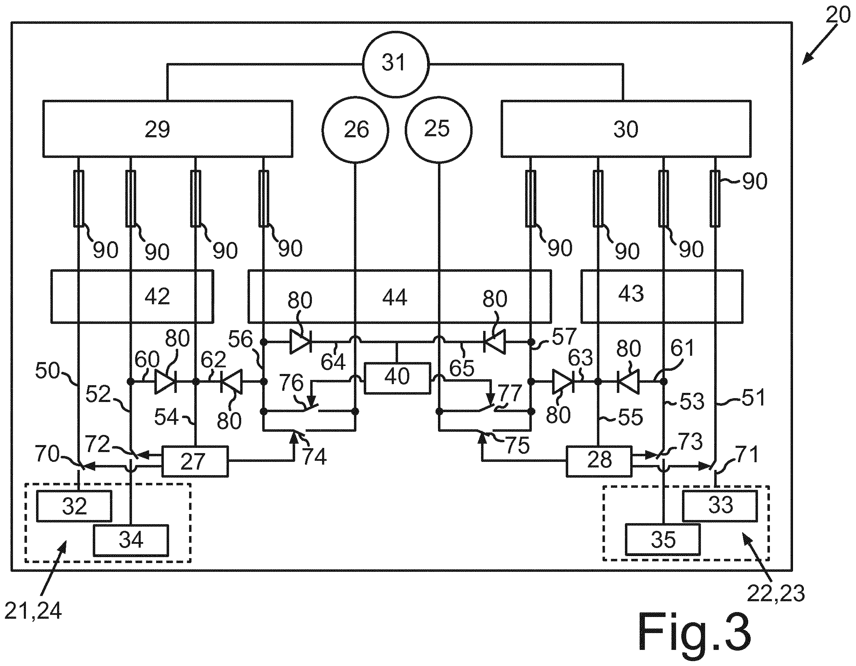

In Fig. 3 ist ein weiteres Beispiel für einen Schaltplan des Bremssystems 20 dargestellt, wobei dieses Bremssystem 20 nur ein gemeinsames elektronisches Schaltungselement 40 umfasst. In jedem der Bremskreise ist die elektrische Leitung 56, 57 zwischen dem Feststellbremssteckverbinder 44 und der elektrischen Feststellbremse 25, 26 mittels der Verbindungsleitung 64, 65 mit dem gemeinsamen elektronischen Schaltungselement 40 gekoppelt. Die jeweilige Verbindungsleitung 64, 65 umfasst die Diode 80, deren Durchlassrichtung zum gemeinsamen elektronischen Schaltungselement 40 gerichtet ist. Alternativ zur Diode 80 kann eine andere Richteinrichtung vorgesehen sein, die dazu ausgelegt ist, nur einen unidirektionalen Stromdurchfluss zum gemeinsamen elektronischen Schaltungselement 40 zuzulassen.

Zudem ist in jedem der Bremskreise parallel zu den Leistungshalbleiterschaltern 74, 75 ein weiterer Leistungshalbleiterschalter 76, 77 angeordnet. Dieser Leistungshalbleiterschalter 76, 77 ist in jedem Bremskreis dazu ausgelegt, die elektrische Leitung 56, 57 abwechselnd zu öffnen und zu schließen, wobei das gemeinsame elektronische Schaltungselement 40 nun dazu ausgelegt ist, diese Leistungshalbleiterschalter 76, 77 anzusteuern und somit beispielsweise nach Empfang des Defektsignals eine Energieversorgung für die elektrische Feststellbremse 25, 26 zu ermöglichen. Mittels dieses Leistungshalbleiterschalters 76, 77 kann also beispielhaft die Ansteuerung der Feststellbremsen 25, 26 mittels des gemeinsamen elektronischen Schaltungselements 40 dargestellt werden.

Kommt es nun beispielsweise in der Steuereinheit 27 zu einem Softwarefehler und zudem zu einem Defekt im Hauptsteckverbinder 43, wird im Bremssystem 20 das Defektsignal gebildet, das dem gemeinsamen elektronischen Schaltungselement 40 bereitgestellt wird. Hierbei ist es beispielsweise möglich, dass die jeweiligen Steuereinheiten 27, 28 in vorgegebenen Zeitintervallen jeweilige Statussignale an das elektronische Schaltungselement 40 übermitteln und sobald diese ausbleiben dies als Defektsignal gewertet wird. In dem elektronischen Schaltungselement 40 und/oder den jeweiligen Steuereinheiten 27, 28 kann also eine Watchdog-Funktion vorgesehen sein, die die Funktion der jeweiligen Steuereinheit 27, 28 überwacht und daher, sobald der Doppelfehler aufgetreten ist, Defektsignal gebildet wird und daraufhin das gemeinsame elektronische Schaltungselement 40 (oder gegebenenfalls die zwei elektronischen Schaltungselemente 40, 41) die elektrischen Feststellbremsen 25, 26 ansteuert. Tritt beispielsweise nur ein Einzelfehler an einem der Bremskreise auf, würde der jeweilige andere Bremskreis das Bremsen des Kraftfahrzeugs 10 übernehmen. Lediglich bei einem Doppelfehler, der jeden der beiden Bremskreise betrifft, kommt es zu einer Ansteuerung der Feststellbremse 25, 26 durch das elektrische Schaltungselement 40, 41.

Insgesamt zeigen die Beispiele eine Möglichkeit zur Beschaltung eines fail-operational Bremssystems, das heißt eines Bremssystems, das im Fehlerfall weiterarbeitet, für ein Kraftfahrzeug, das beispielsweise kein Bremspedal aufweist.

### Bezugszeichenliste

- 10: Kraftfahrzeug
- 14: Rad
- 16: Vorderachse
- 18: Hinterachse
- 21 - 24: Betriebsbremse
- 25,26: Feststellbremse
- 27, 28: Steuereinheit
- 29, 30: Batterie
- 31: Generator
- 32, 33: Ventileinrichtung
- 34, 35: Pumpe
- 40, 41: elektronisches Schaltungselement
- 42, 43: Hauptsteckverbinder
- 44: Feststellbremssteckverbinder
- 50 - 57: elektrische Leitung
- 60 - 65: Verbindungsleitung
- 70 - 77: Leistungshalbleiterschalter
- 80: Diode
- 90: Klemme

## Patentansprüche

1. Bremssystem (20) für ein Kraftfahrzeug (10), umfassend:
- vier jeweils einem Rad (14) des Kraftfahrzeugs (10) zugeordnete Betriebsbremsen (21, 22, 23, 24);
- zumindest zwei jeweiligen Rädern (14) des Kraftfahrzeugs (10) zugeordnete elektrische Feststellbremsen (25, 26);
- zwei Steuereinheiten (27, 28), die jeweils dazu ausgelegt sind, einen jeweiligen Bremskreis des Bremssystems (20) anzusteuern, der zwei der vier Betriebsbremsen (21, 22, 23, 24) und zumindest eine der zumindest zwei elektrischen Feststellbremsen (25, 26) umfasst;
- zwei Batterien (29, 30) zum Versorgen von jeweils einem der Bremskreise des Bremssystems (20) mit elektrischer Energie;
wobei das Bremssystem (20) dazu ausgelegt ist, ein Defektsignal zu bilden, falls ein die beiden Bremskreise betreffender Doppelfehler erkannt wird, der einen Defekt in zumindest einer der Steuereinheiten (27, 28) umfasst und/oder bei dem eine jeweilige Versorgungsspannung zumindest einer der Steuereinheiten (27, 28) unter einen vorgegebenen Grenzwert sinkt;
**dadurch gekennzeichnet, dass**
das Bremssystem (20) zumindest ein elektronisches Schaltungselement (40, 41) umfasst, das dazu ausgelegt ist, bei gebildetem Defektsignal die elektrischen Feststellbremsen (25, 26) anzusteuern, wobei das zumindest eine elektronische Schaltungselement (40, 41) als anwendungsorientierte integrierte Schaltung, ASIC, ausgebildet und dazu ausgelegt ist, unabhängig von der jeweiligen Steuereinheit (27, 28) und den jeweiligen Betriebsbremsen (21, 22, 23, 24) mit elektrischer Energie der jeweiligen Batterie (29, 30) versorgt zu werden.

2. Bremssystem (20) nach dem vorhergehenden Anspruch, wobei in jedem der Bremskreise die für den Bremskreis vorgesehene Batterie (29, 30) mit den Betriebsbremsen (21, 22, 23, 24) und der Steuereinheit (27, 28) des Bremskreises mittels eines Hauptsteckverbinders (42, 43) verbunden ist und mit der zumindest einen Feststellbremse (25,26) des Bremskreises mittels eines vom Hauptsteckverbinder (42, 43) mechanisch entkoppelten Feststellbremssteckverbinders (44) verbunden ist.

3. Bremssystem (20) nach Anspruch 2, wobei der jeweilige Bremskreis zum Ansteuern der jeweiligen Betriebsbremsen (21, 22, 23, 24) eine Ventileinrichtung (32, 33) und eine Pumpe (34, 35) umfasst, die in jedem der Bremskreise dazu ausgelegt sind, einen Fluss eines den Bremskreis durchströmenden Bremsmediums zu steuern, wobei in jedem Bremskreis die Ventileinrichtung (32, 33) und die Pumpe (34, 35) jeweils von der Steuereinheit (27, 28) ansteuerbar sind und über den Hauptsteckverbinder (42, 43) des Bremskreises mit der jeweiligen Batterie (29, 30) gekoppelt sind.

4. Bremssystem (20) nach Anspruch 3, wobei in jedem der Bremskreise eine elektrische Versorgung der Pumpe (34, 35) und/oder der Ventileinrichtung (32, 33) mit einer elektrischen Versorgung der Steuereinheit (27,28) über eine Richteinrichtung gekoppelt ist, wobei die Richteinrichtung dazu ausgelegt ist, nur einen unidirektionalen Stromdurchfluss zur Steuereinheit (27, 28) zuzulassen.

5. Bremssystem (20) nach einem der vorhergehenden Ansprüche, wobei in jedem der Bremskreise eine elektrische Versorgung der elektrischen Feststellbremse (25, 26) mit der elektrischen Versorgung der Steuereinheit (27,28) über eine Richteinrichtung gekoppelt ist, wobei die Richteinrichtung dazu ausgelegt ist, nur einen unidirektionalen Stromdurchfluss zur Steuereinheit (27, 28) zuzulassen.

6. Bremssystem (20) nach einem der vorhergehenden Ansprüche, wobei das Bremssystem (20) nur ein gemeinsames elektronisches Schaltungselement (40, 41) umfasst und in jedem der Bremskreise die elektrische Versorgung der elektrischen Feststellbremse (25, 26) mit einer elektrischen Versorgung des gemeinsamen elektronischen Schaltungselements (40, 41) über eine Richteinrichtung gekoppelt ist, wobei die Richteinrichtung dazu ausgelegt ist, nur einen unidirektionalen Stromdurchfluss zum gemeinsamen elektronischen Schaltungselement (40, 41) zuzulassen.

7. Kraftfahrzeug (10) mit einem Bremssystem (20) nach einem der vorhergehenden Ansprüche.

## Claims

1. Brake system (20) for a motor vehicle (10), comprising:
- four service brakes (21, 22, 23, 24) respectively associated with a wheel (14) of the motor vehicle (10);
- at least two electric parking brakes (25, 26) associated with respective wheels (14) of the motor vehicle (10);
- two control units (27, 28) that are respectively designed to control a respective brake circuit of the brake system (20), said brake circuit comprising two of the four service brakes (21, 22, 23, 24) and at least one of the at least two electrical parking brakes (25, 26);
- two batteries (29, 30) for supplying a respective one of the brake circuits of the brake system (20) with electrical energy;
wherein the brake system (20) is designed to produce a defect signal in the event that a double fault affecting the two brake circuits is detected which includes a defect in at least one of the control units (27, 28), and/or in which a respective supply voltage to at least one of the control units (27, 28) falls below a prespecified limit value;
**characterized in that**
the brake system (20) comprises at least one electronic circuit element (40, 41) which is designed to control the electrical parking brakes (25, 26) in the event of the defect signal being produced, wherein the at least one electronic circuit element (40, 41) is designed as an application-specific integrated circuit, ASIC, and is designed to be supplied with electrical energy from the respective battery (29, 30) independently of the respective control unit (27, 28) and of the respective service brakes (21, 22, 23, 24).

2. Brake system (20) according to the preceding claim, wherein, in each of the brake circuits, the battery (29, 30) provided for the brake circuit is connected to the service brakes (21, 22, 23, 24) and to the control unit (27, 28) of the brake circuit by means of a main plug connector (42, 43), and is connected to the at least one parking brake (25, 26) of the brake circuit by means of a parking brake plug connector (44) mechanically decoupled from the main plug connector (42, 43).

3. Brake system (20) according to Claim 2, wherein the respective brake circuit for actuating the respective service brakes (21, 22, 23, 24) comprises a valve device (32, 33) and a pump (34, 35) which are designed in each of the brake circuits to control a flow of a brake medium flowing through the brake circuit, wherein in each brake circuit the valve device (32, 33) and the pump (34, 35) are respectively controllable by the control unit (27, 28) and are coupled to the respective battery (29, 30) via the main plug connector (42, 43) of the brake circuit.

4. Brake system (20) according to Claim 3, wherein, in each of the brake circuits, an electrical supply to the pump (34, 35) and/or to the valve device (32, 33) is coupled to an electrical supply to the control unit (27,28) via a rectifier device, wherein the rectifier device is designed to permit only a unidirectional current flow to the control unit (27, 28).

5. Brake system (20) according to any one of the preceding claims, wherein, in each of the brake circuits, an electrical supply to the electrical parking brake (25, 26) is coupled to the electrical supply to the control unit (27,28) via a rectifier device, wherein the rectifier device is designed to permit only a unidirectional current flow to the control unit (27, 28).

6. Brake system (20) according to any one of the preceding claims, wherein the brake system (20) comprises only one common electronic circuit element (40, 41) and, in each of the brake circuits, the electrical supply to the electric parking brake (25, 26) is coupled to an electrical supply to the common electronic circuit element (40, 41) via a rectifier device, wherein the rectifier device is designed to permit only a unidirectional current flow to the common electronic circuit element (40, 41).

7. Motor vehicle (10) with a brake system (20) according to any one of the preceding claims.

## Revendications

1. Système de freinage (20) pour un véhicule automobile (10), comprenant :
- quatre freins de service (21, 22, 23, 24) associés respectivement à une roue (14) du véhicule automobile (10) ;
- au moins deux freins de stationnement (25, 26) électriques associés à des roues (14) respectives du véhicule automobile (10) ;
- deux unités de commande (27, 28), qui sont conçues respectivement pour commander un circuit de freinage respectif du système de freinage (20), lequel comprend deux des quatre freins de service (21, 22, 23, 24) et au moins un des au moins deux freins de stationnement (25, 26) électriques ;
- deux batteries (29, 30) pour alimenter respectivement en énergie électrique un des circuits de freinage du système de freinage (20) ;
le système de freinage (20) étant conçu pour former un signal de défaut si un double défaut concernant les deux circuits de freinage est détecté, lequel comprend un défaut dans au moins une des unités de commande (27, 28) et/ou dans lequel une tension d'alimentation respective d'au moins une des unités de commande (27, 28) tombe en dessous d'une valeur limite prédéfinie ;
**caractérisé en ce que**
le système de freinage (20) comprend au moins un élément de commutation (40, 41) électronique, lequel est conçu pour commander les freins de stationnement (25, 26) électriques lorsque le signal de défaut est formé, l'au moins un élément de commutation (40, 41) électronique étant réalisé comme un circuit intégré propre à une application, ASIC, et étant conçu pour être alimenté indépendamment de l'unité de commande (27, 28) respective et des freins de service (21, 22, 23, 24) respectifs en l'énergie électrique de la batterie (29, 30) respective.

2. Système de freinage (20) selon la revendication précédente, dans lequel dans chacun des circuits de freinage la batterie (29, 30) prévue pour le circuit de freinage est connectée au moyen d'un connecteur principal (42, 43) aux freins de service (21, 22, 23, 24) et l'unité de commande (27, 28) du circuits de freinage et est connectée au moyen d'un connecteur de frein de stationnement (44) mécaniquement découplé du connecteur principal (42, 43) à l'au moins un frein de stationnement (25, 26) du circuit de freinage.

3. Système de freinage (20) selon la revendication 2, dans lequel le circuit de freinage respectif comprend, pour la commande des freins de service respectifs (21, 22, 23, 24), un dispositif de ventilation (32, 33) et une pompe (34, 35), lesquels sont conçus pour, dans chacun des circuits de freinage, commander un débit d'un fluide de freinage circulant dans le circuit de freinage, dans lequel, dans chaque circuit de freinage, le dispositif de vanne (32, 33) et la pompe (34, 35) peuvent être commandés respectivement par l'unité de commande (27, 28) et sont couplés à la batterie (29, 30) respective à travers le connecteur principal (42, 43) du circuit de freinage.

4. Système de freinage (20) selon la revendication 3, dans lequel, dans chacun des circuits de freinage, une alimentation électrique de la pompe (34, 35) et/ou du dispositif de vanne (32, 33) est couplée à une alimentation électrique de l'unité de commande (27, 28) à travers un dispositif de dressage, dans lequel le dispositif de dressage est conçu pour permettre uniquement un passage de courant unidirectionnel vers l'unité de commande (27, 28).

5. Système de freinage (20) selon l'une quelconque des revendications précédentes, dans lequel, dans chacun des circuits de freinage, une alimentation électrique du frein de stationnement (25, 26) électrique est couplée à une alimentation électrique de l'unité de commande (27, 28) à travers un dispositif de dressage, dans lequel le dispositif de dressage est conçu pour permettre uniquement un passage de courant unidirectionnel vers l'unité de commande (27, 28).

6. Système de freinage (20) selon l'une quelconque des revendications précédentes, dans lequel le système de freinage (20) comprend uniquement un élément de commutation (40, 41) et, dans chacun des circuits de freinage, l'alimentation électrique du frein de stationnement (25, 26) électrique est couplée à une alimentation électrique de l'unité de commande (40, 41) à travers un dispositif de dressage, dans lequel le dispositif de dressage est conçu pour permettre uniquement un passage de courant unidirectionnel vers l'élément de commutation (40, 41).

7. Véhicule automobile (10) comprenant d'un système de freinage (20) selon l'une quelconque des revendications précédentes.
